# EUROPEAN PATENT APPLICATION

(11) **EP 2 410 374 A1**
(43) Date of publication of application: **25.01.2012**
(21) Application number: 09841906.2
(22) Date of filing: 16.10.2009
(51) Int. Cl.: G02F 1/1335, G02B 5/20

(54) **DISPLAY PANEL AND DISPLAY DEVICE**

(30) Priority: 19.03.2009 JP 2009068290
(71) Applicant: Sharp Kabushiki Kaisha, Osaka-shi, Osaka 545-8522 (JP)
(72) Inventor: KADOWAKI, Shinya, Osaka-shi, Osaka 545-8522 (JP); ISHIDA, Takeshi, Osaka-shi, Osaka 545-8522 (JP); KAIDA, Kazuya, Osaka-shi, Osaka 545-8522 (JP); YASHIRO, Yuhji, Osaka-shi, Osaka 545-8522 (JP); KUNIMASA, Fumie, Osaka-shi, Osaka 545-8522 (JP); SHIGETA, Hiroaki, Osaka-shi, Osaka 545-8522 (JP); YUKI, Ryuzo, Osaka-shi, Osaka 545-8522 (JP)
(74) Representative: Müller - Hoffmann & Partner
(86) International application number: PCT/JP2009/067878
(87) International publication number: WO 2010/106704

(57) **Abstract**

Disclosed is a liquid crystal display panel wherein the utilization efficiency of light can be improved, while suppressing deterioration of the contrast. Specifically, a color filter (17) of a liquid crystal display panel (10) comprises: a black matrix (21) which is provided with an opening (21a); a red phosphor layer (22) and a red filter layer (23) which are arranged within the opening (21a) in a red display region (R); a green phosphor layer (24) and a green filter layer (25) which are arranged within the opening (21a) in a green display region (G); and a transparent resin layer (26) and a blue filter layer (27) which are arranged within the opening (21a) in a blue display region (B) A light exit surface of the transparent resin layer (26) is provided with a plurality of projected portions (26c), and the transparent resin layer (26) has a refractive index different from that of the blue filter layer (27), which is in contact with the light exit surface. The transparent resin layer (26) is a light diffusion layer, and is capable of increasing the viewing angle of blue light.

## Description

### Technical Field

The present invention relates to a display panel and a display device.

### Background Art

Conventionally, a display device is known, which includes a backlight device that outputs (emits) white light and a display panel onto which the light output from the backlight device is shined. In such a display device, the display panel includes: a pair of boards that sandwich, for example, liquid crystal; and a color filter that is disposed on a light input side or a light output side of the pair of boards.

The color filter is provided with: a red filter layer that blocks green light and blue light, and transmits red light; a green filter layer that blocks the red light and the blue light, and transmits the green light; and a blue filter layer that blocks the red light and the green light, and transmits the blue light. These red filter layer, green filter layer and blue filter layer are formed in a red display region of the color filter, a green display region of the color filter, and a blue display region of the color filter, respectively.

And, in each display region, of the light (red light, green light and blue light) output from the backlight device, by transmitting only light that has a predetermined color, it is possible to perform color display on the display panel.

However, in the conventional display device, in each display region, the color filter blocks the light of two colors of the red light, the green light and the blue light, so that there is a disadvantage that the light use efficiency is low.

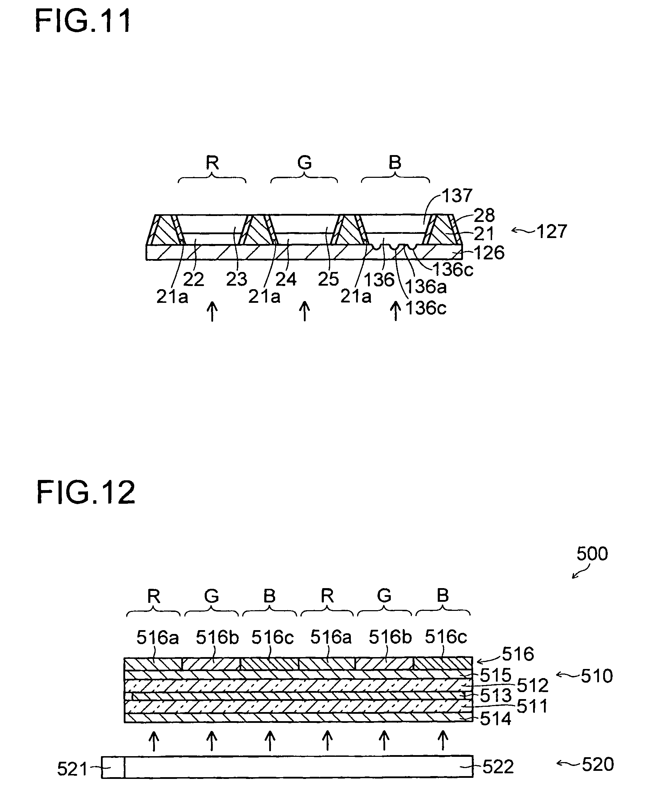

As a method for improving this disadvantage, a display device is proposed, in which a fluorescent material for converting the light from a light source into predetermined-color light is disposed. Fig. 12 is a sectional view that shows a schematic structure as an example of a conventional liquid crystal display device that includes a fluorescent material.

A liquid crystal display device 500 as the conventional example, as shown in Fig. 12, includes: a liquid crystal display panel 510; and a backlight device 520 that has a blue LED (blue light emitting diode) 521 and a light guide plate 522 which are disposed to a rear-surface side of the liquid crystal display panel 510.

The liquid crystal display panel 510 includes: a pair of boards 511 and 512; a liquid crystal layer 513 disposed between the pair of boards 511 and 512; a light polarization filter 514 disposed on a light input surface (rear surface) of the board 511; a light polarization filter 515 disposed on a light output surface (front surface) of the board 511; and a color filter 516.

The color filter 516 includes: a red fluorescent layer 516a disposed in a red display region R; a green fluorescent layer 516b disposed in a green display region G; a blue transmission portion 516c disposed in a blue display region B.

The red fluorescent layer 516a is formed of: a fluorescent material that receives blue light to excite red light; and a resin that contains the fluorescent material.

The green fluorescent layer 516b is formed of: a fluorescent material that receives blue light to excite green light; and a resin that contains the fluorescent material.

The blue transmission portion 516c is formed of: diffusion particles (or a fluorescent material) for diffusing received blue light; and a resin that contains the diffusion particles.

In this liquid crystal display device 500, in each display region, blue light from the backlight device 520 is diffused by the fluorescent material in the red fluorescent layer 516a, the fluorescent material in the green fluorescent layer 516b, and the diffusion particles (or fluorescent material) in the blue transmission portion 516c. According to this, it is possible to enlarge the view angles of the red light, the green light and the blue light, so that it is possible to improve the visual characteristic.

Here, such a display device is disclosed in, for example, a patent document 1 and a patent document 2.

### Citation List

### Patent Literature

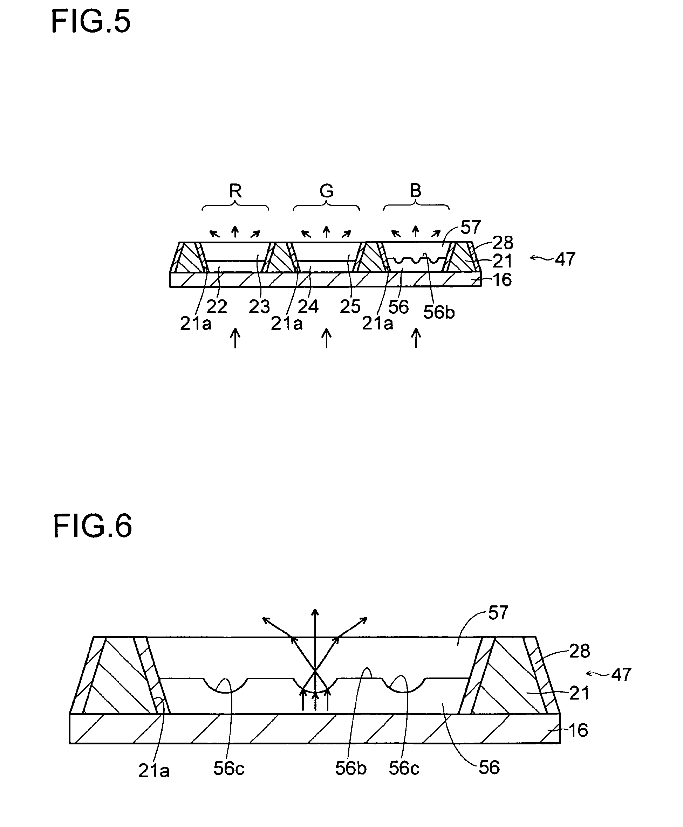

PLT1: JP No. 3416056 (page 5, Fig. 6)
PLT2: JP-A-1992-12323 (pp 2 to 3, Fig. 1)

### Summary of Invention

### Technical Problem

However, in the above-described liquid crystal display device 500 as the conventional example, the blue transmission portion 516c contains the diffusion particles (or fluorescent material) for diffusing the blue light, so that part of the blue light entering the blue transmission portion 516c is reflected by the diffusion particles (or fluorescent material) toward a rear surface (toward the backlight device 520). Because of this, the transmittance of the light (blue light) at the blue display region B becomes low, so that there is a problem that the light use efficiency becomes low.

Besides, in the liquid crystal display device 500, in a case where external light enters the blue transmission portion 516c, the entering light is diffused by the diffusion particles (or fluorescent material). And, part of the diffused light is output forward (in a direction opposite to the backlight device 520), so that there is a problem that the contrast becomes low.

The present invention has been made to solve the above problems, and it is an object of the present invention to provide: a display panel which is able to alleviate the contrast becoming low and improve the light use efficiency; and a display device that includes the display panel.

### Solution to Problem

To achieve the above object, a display panel according to a first aspect of the present invention includes:
a board that has a light transmission characteristic;
a red fluorescent layer that is disposed in a red display region on one surface of the board and receives blue light to excite red light;
a red filter layer that is disposed on the red fluorescent layer, blocks green light and blue light, and transmits red light;
a green fluorescent layer that is disposed on a green display region on the one surface of the board and receives blue light to excite green light;
a green filter layer that is disposed on the green fluorescent layer, blocks red light and blue light, and transmits green light;
a blue transmission layer that is disposed in a blue display region on the one surface of the board, blocks red light and green light, transmits blue light and includes one or more layers;
wherein the blue transmission layer includes a light diffusion layer that has: a light input surface through which blue light from a light source is input; and a light output surface through which the blue light from the light source is output;
at least one of the light input surface and the light output surface of the light diffusion layer is provided with at least either of a plurality of convex portions and a plurality of concave portions; and
the light diffusion layer has a refractive index different from that of a layer which is in contact with the surface that is provided with at least either of the plurality of convex portions and the plurality of concave portions.

In the display panel according to this first aspect, as described above, at least one of the light input surface and the light output surface of the light diffusion layer is provided with at least either of the plurality of convex portions and the plurality of concave portions; and the light diffusion layer is so structured as to have the refractive index different from that of the layer which is in contact with the surface that is provided with at lest either of the plurality of convex portions and the plurality of concave portions. According to this, the blue light from the light source, when passing through the light diffusion layer, is refracted in accordance with the Snell's law by at least either of the plurality of convex portions and the plurality of concave portions. Because of this, without containing diffusion particles and the like for diffusing the blue light into the blue transmission portion, it is possible to enlarge the view angle of the blue light output from the blue transmission layer. As a result of this, it is possible to improve the visual characteristic.

Besides, in the display panel according to the first aspect, as described above, it is not necessary to contain diffusion particles and the like for diffusing the blue light into the blue transmission layer, so that when the blue light passes through the blue transmission layer, it is possible to alleviate the transmittance of the blue light becoming low. According to this, it is possible to alleviate the light (blue light) use efficiency becoming low.

Besides, it is not necessary to contain diffusion particles and the like for diffusing the blue light into the blue transmission layer, so that in a case where external light enters the blue transmission layer, the external light is not diffused by diffusing particles. According to this, it is possible to alleviate part of the external light being output forward, so that it is possible to alleviate the contrast becoming low.

In the display panel according to the above first aspect, preferably, the blue transmission layer includes the light diffusion layer and a blue filter layer that is disposed on the light output surface of the light diffusion layer, blocks red light and green light, and transmits blue light;
the light output surface of the light diffusion layer is provided with at least either of the plurality of convex portions and the plurality of concave portions; and
the light diffusion layer and the blue filter layer have refractive indexes different from each other.
According to this structure, it is possible to refract the blue light from the light source by means of the light output surface (interface between the light diffusion layer and the blue filter layer) of the light diffusion layer. According to this, it is possible to easily enlarge the view angle of the blue light output from the blue transmission layer, so that it is possible to easily improve the visual characteristic.

In the display panel according to the above first aspect, preferably, the light diffusion layer includes a blue filter layer that blocks red light and green light, and transmits blue light; and
a light output surface of the blue filter layer is provided with at least either of the plurality of convex portions and the plurality of concave portions.
According to this structure, it is possible to refract the blue light from the light source by means of the light output surface (interface between the blue filter layer and the air layer) of the blue filter layer. According to this, it is possible to easily enlarge the view angle of the blue light output from the blue transmission layer, so that it is possible to easily improve the visual characteristic.

In the display panel according to the above first aspect, preferably, the blue transmission layer has a function to absorb red light and green light. According to this structure, it is possible to alleviate the red light and the green light of the external light being reflected forward by the blue transmission layer, so that it is possible to alleviate the contrast becoming low.

In the display panel according to the above first aspect, preferably, on one surface of the board, a light blocking member having a light blocking characteristic is disposed among the red display region, the green display region and the blue display region. According to this structure, it is possible to alleviate the respective light in the red display region, the green display region and the blue display region entering the neighboring display region. According to this, it is possible to alleviate the light being mixed among the red display region, the green display region and the blue display region, so that it is possible to more alleviate the contrast becoming low.

In the display panel in which the light blocking member is disposed on the one surface of the board, preferably, the light blocking member is formed of a black resin. According to this structure, by means of the light blocking member, it is possible to easily block the red light, the green light and the blue light.

In the display panel in which the light blocking member is disposed on the one surface of the board, preferably, the light blocking member has a tapered shape in section; and on a surface of the light blocking member, a metal reflection film having a function to reflect light is disposed. According to this structure, by mans of the metal reflection film, it is possible to reflect forward the light emitted in the inside of the fluorescent layer, so that it is possible to more improve the light use efficiency.

In the display panel according to the above first aspect, preferably, a band-pass filter layer which reflects red light and green light, and transmits blue light is disposed between the board and at least the red fluorescent layer and the green fluorescent layer. According to this structure, it is possible to reflect forward, by means of the band-pass filter layer, the light that is converted into the red light in the red display region, and the light that is converted into the green light in the green display region, so that it is possible to more improve the light use efficiency.

In the display panel according to the above first aspect, preferably, on the other-surface side of the board, a light switching device which controls transmission and light blocking of the blue light from the light source may be disposed.

In the display panel in which the light switching device is disposed on the other-surface side of the board, preferably, the switching device includes liquid crystal. According to this structure, it is possible to obtain a liquid crystal display panel that is able to alleviate the contrast becoming low and improve the light use efficiency.

A display device according to a second aspect of the present invention includes: the display panel having the above structure; and a light source that outputs blue light for illuminating the display panel. According to this structure, it is possible to obtain the display device that is able to alleviate the contrast becoming low and improve the light use efficiency.

### Advantageous Effects of Invention

As described above, according to the present invention, it is possible to easily obtain: a display panel which is able to alleviate the contrast becoming low and improve the light use efficiency; and a display device that includes the display panel.

### Brief Description of Drawings

[Fig. 1] is a sectional view showing a schematic structure of a liquid crystal display device that includes a liquid crystal display panel according to a first embodiment of the present invention.
[Fig. 2] is a sectional view showing structures of a color filter and a band-pass filter layer of the display panel according to the first embodiment of the present invention shown in Fig. 1.
[Fig. 3] is an enlarged sectional view showing structures of the color filter and the band-pass filter layer of the display panel according to the first embodiment of the present invention shown in Fig. 1.
[Fig. 4] is an enlarged sectional view showing structures of the color filter and the band-pass filter layer of the display panel according to the first embodiment of the present invention shown in Fig. 1.
[Fig. 5] is a sectional view showing structures of a color filter and a band-pass filter layer of a liquid crystal display panel according to a second embodiment of the present invention.
[Fig. 6] is an enlarged sectional view showing structures of the color filter and the band-pass filter layer of the display panel according to the second embodiment of the present invention shown in Fig. 5.
[Fig. 7] is an enlarged sectional view showing structures of the color filter and the band-pass filter layer of the display panel according to the second embodiment of the present invention shown in Fig. 5.
[Fig. 8] is a sectional view showing structures of a color filter and a band-pass filter layer of a liquid crystal display panel according to a third embodiment of the present invention.
[Fig. 9] is a sectional view showing structures of a color filter and a band-pass filter layer of a liquid crystal display panel according to a fourth embodiment of the present invention.
[Fig. 10] is a sectional view showing structures of a color filter and a band-pass filter layer of a liquid crystal display panel according to a first modification of the present invention.
[Fig. 11] is a sectional view showing structures of a color filter and a band-pass filter layer of a liquid crystal display panel according to a second modification of the present invention.
[Fig. 12] is a sectional view showing a schematic structure of a liquid crystal display device as a conventional example that includes a fluorescent material.

### Description of Embodiments

Hereinafter, embodiments of the present invention are described with reference to the drawings.

### (First Embodiment)

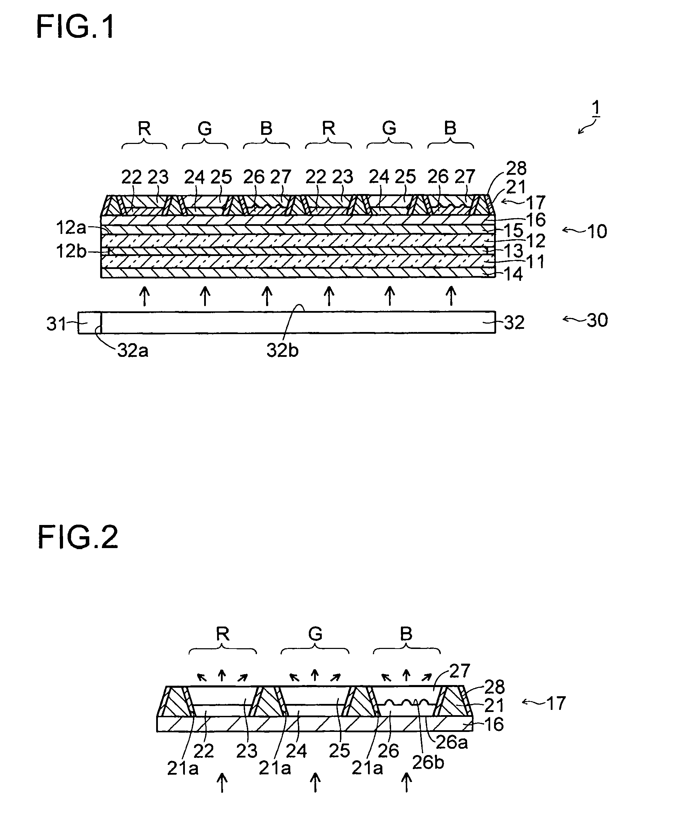

With reference to Fig. 1 to Fig. 4, a structure of a liquid crystal display device 1, which includes a liquid crystal display panel 10 according to a first embodiment of the present invention, is described.

The liquid crystal display device 1 according to the first embodiment of the present invention, as shown in Fig. 1, includes: the liquid crystal display panel 10: a backlight device 30 that is disposed to a rear-surface side of the liquid crystal display panel 10 and shines blue light onto the liquid crystal display panel 10; and a frame (not shown) that holds the liquid crystal display panel 10 and the backlight device 30. Here, the liquid crystal display device 1 is an example of a "display device" according the present invention; and the liquid crystal display panel 10 is an example of a "display panel" according to the present invention.

The liquid crystal display panel 10 includes: an AM board (active matrix board) 11; an opposite board 12 that is disposed opposite to the AM board 11; a liquid crystal layer 13 that is disposed between the AM board 11 and the opposite board 12; a light polarization filter 14 that is disposed on a light input surface (rear surface) of the AM 11; a light polarization filter 15 that is disposed on a light output surface (front surface) 12a of the opposite board 12; a band-pass filter layer 16; and a color filter 17. Here, the opposite board 12 is an example of a "board" of the present invention; and the light output surface 12a is an example of "one surface" of the present invention.

The AM board 11 and the opposite board 12 are formed of a board made of glass and the like that has a light transmission characteristic. Besides, the AM board 11 and the opposite board 12 are provided with a transparent electrode, an oriented film and the like that are not shown.

The liquid crystal layer 13 is disposed on a light input-surface (rear surface) 12b side of the opposite board 12. Besides, the liquid crystal layer 13 includes liquid crystal whose light transmission and light blocking are controlled by performing voltage control of transparent electrodes (not shown) of the AM board 11 and the opposite board 12; and functions as an optical switching device. Here, the light input surface 12b is an example of "other surface" of the present invention.

The band-pass filter layer 16 has a function to transmit light that has a predetermined wavelength. Specifically, the band-pass filter layer 16 has a function to transmit blue light, reflect and block red light and green light.

Here, in the first embodiment, as shown in Fig. 2, the color filter 17 includes: a black matrix 21 that is provided with an opening portion 21a through each of a red display region R, a green display region G and a blue display region B; a red fluorescent layer 22 and a red filter layer 23 that are disposed in the opening portion 21a of the red display region R; a green fluorescent layer 24 and a green filter layer 25 that are disposed in the opening portion 21a of the green display region G; a transparent resin layer 26 and a blue filter layer 27 that are disposed in the opening portion 21a of the blue display region B. Here, the black matrix 21 is an example of a "light blocking member" of the present invention. Besides, the transparent resin layer 26 is an example of a "light diffusion layer" of the present invention. Besides, the blue filter layer 27 is an example of a "layer that is in contact with a surface which is provided with at least either of a plurality of convex portions and a plurality of concave portions" of the present invention. Besides, by means of the transparent resin layer 16 and the blue filter layer 27, a "blue transmission layer" of the present invention is composed.

The black matrix 21 is formed of a black resin and the like; and has a function to alleviate the respective light from the red display region R, the green display region G, and the blue display region B entering the neighboring display region.

Besides, the black matrix 21 is so formed as to have a tapered shape in section between the red display region R, the green display region G, and the blue display region B. Besides, on side surfaces of the black matrix 21, a metal reflection film 28, which has a function to reflect light and is formed of aluminum, for example, is disposed.

The red fluorescent layer 22 is formed of: a fluorescent material (not shown) made of, for example, CaS:Eu and the like; and an acrylic resin in which the fluorescent material is contained. This fluorescent material has a function to receive blue light to excite red light.

Besides, the red light excited by the fluorescent material is diffused, so that it is possible to enlarge the view angle of the red light. Here, part of the red light travels toward a rear surface (toward the backlight device 30), but is reflected forward by the band-pass filter layer 16.

Besides, an interface (a light output surface of the red fluorescent layer 22 and a light input surface of the red filter layer 23) between the red fluorescent layer 22 and the red filter layer 23 is formed into a planar-surface shape.

The red filter layer 23 has a function to transmit the red light. According to this, the red light converted by the red fluorescent layer 23 passes through the red filer layer 23 and exits forward.

Besides, the red filter layer 23 has a function to absorb (blocks) the green light and the blue light. According to this, part of the blue light that is not converted into the red light by the red fluorescent layer 23 is absorbed by the red filter layer 23. Because of this, it is possible to alleviate the blue light exiting from the red display region R, so that it is possible to alleviate the contrast becoming low.

Besides, in a case where external light impinges on the red filter layer 23, light (green light and blue light and the like) other than the red light of the external light is absorbed by the red filter layer 23, so that it is possible to alleviate the red fluorescent layer 22 being excited by the external light (blue light).

The green fluorescent layer 24 is formed of: a fluorescent material (not shown) made of, for example, ZnS:CuAl and the like; and an acrylic resin in which the fluorescent material is contained. This fluorescent material has a function to receive blue light to excite green light.

Besides, the green light excited by the fluorescent material is diffused, so that it is possible to enlarge the view angle of the green light. Here, part of the green light travels toward a rear surface (toward the backlight device 30), but is reflected forward by the band-pass filter layer 16.

Besides, an interface (a light output surface of the green fluorescent layer 24 and a light input surface of the green filter layer 25) between the green fluorescent layer 24 and the green filter layer 25 is formed into a planar-surface shape.

The green filter layer 25 has a function to transmit the green light. According to this, the green light converted by the green fluorescent layer 24 passes through the green filer layer 25 and exits forward.

Besides, the green filter layer 25 has a function to absorb (blocks) the red light and the blue light. According to this, part of the blue light that is not converted into the green light by the green fluorescent layer 24 is absorbed by the green filter layer 25. Because of this, it is possible to alleviate the blue light exiting from the green display region G, so that it is possible to alleviate the contrast becoming low.

Besides, in a case where external light impinges on the green filter layer 25, light (red light and blue light and the like) other than the green light of the external light is absorbed by the green filter layer 25, so that it is possible to alleviate the green fluorescent layer 24 being excited by the external light (blue light).

The transparent resin layer 26 includes: a light input surface (front surface) 26a through which the blue light from the backlight device 30 (blue LED 31) (see Fig. 1) is input; and a light output surface (rear surface) 26b through which the blue light from the backlight device 30 (blue LED 31) is output. Here, the light output surface 26b is an example of a "surface which is provided with at least either of a plurality of convex portions and a plurality of concave portions" of the present invention.

Besides, the transparent resin layer 26 is formed of a resin and the like that have a light transmission characteristic. Here, if only the transparent resin layer 26 transmits at least the blue light, the transparent resin layer 26 may or may not transmit the red light and the green light.

Here, in the first embodiment, the transparent resin layer 26 does not contain diffusion particles nor a fluorescent material for diffusing the light. Besides, the transparent resin layer 26 has a function to output the blue light from the backlight device 30 (blue LED 31) as it is via the light output surface 26b without converting the blue light into the red light and the green light.

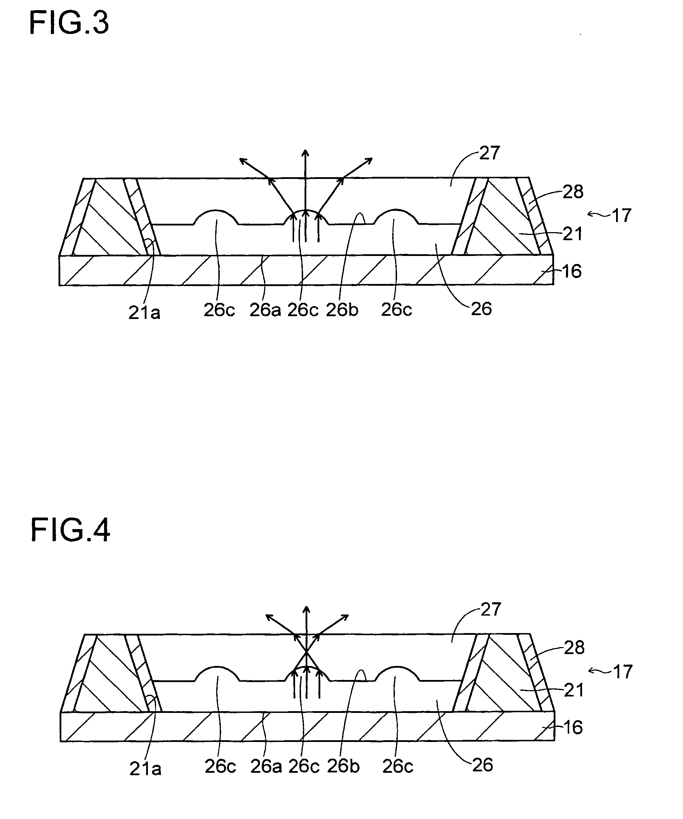

Besides, in the first embodiment, the light output surface 26b of the transparent resin layer 26 is provided with a plurality of convex portions 26c (see Fig. 3). Besides, the transparent resin layer 26 has a refractive index different from that of the blue filter layer 27 which is in contact with the light output surface 26b. Because of this, the blue light from the backlight device 30 (blue LED 31), when passing through the transparent resin layer 26, is so refracted in accordance with the Snell's law as to spread radially, so that it is possible to enlarge the view angle of the blue light.

Specifically, in a case where the refractive index of the transparent resin layer 26 is smaller than the refractive index of the blue filter layer 27, the blue light, as shown in Fig. 3, is so refracted as to radially spread; in a case where the refractive index of the transparent resin layer 26 is larger than the refractive index of the blue filter layer 27, the blue light, as shown in Fig. 4, is so refracted as to radially spread. As described above, irrespective of whether the refractive index of the transparent resin layer 26 is smaller or larger than the refractive index of the blue filter layer 27, the blue light, when passing through the light output surface 26b (interface between the transparent resin layer 26 and the blue filter layer 27) of the transparent resin layer 26, is refracted such that the view angle becomes large.

Besides, the convex portion 26c is so formed as to have: a diameter (width) of, for example, about 1 µm to about 20 µm; and a height of, for example, about 1 µm to about 10 µm. Here, if the convex portion 26c is so formed as to have: a diameter (width) of, for example, about 0.5 µm smaller than the above; and a height of, for example, about 0.5 µm, a diffraction effect at the time the blue light passes through the light output surface 26b increases.

The blue filter layer 27 has a function to transmit the blue light. According to this, the blue light passing through the transparent resin layer 26 passes through the blue filter layer 27 to exit forward.

Besides, the blue filter layer 27 has a function to absorb (blocks) the red light and the green light.

Besides, in a case where external light impinges on the blue filter layer 27, light (red light and green light and the like) other than the blue light of the external light is absorbed by the blue filter layer 27. Besides, the blue light of the external light passes through the blue filter layer 27 and the transparent resin layer 26, and exits toward the backlight device 30. Because of this, the blue light of the external light is not output forward.

The backlight device 30, as shown in Fig. 1, is an edge-light type of backlight device; and includes: the blue LED 31 that outputs (emits) the blue light; and a light guide plate 32 that has a light input surface 32a through which the blue light from the blue LED 31 is input. Here, on a light output surface 32b side (which faces the liquid crystal display panel 10) of the light guide plate 32, a diffusion plate and a light collection lens may be disposed. Besides, on a rear-surface side of the light guide plate 32, a reflection member having a function to reflect the light may be disposed. Here, the blue LED 31 is an example of a "light source" of the present invention.

The light guide plate 32 has a function to receive the blue light from the blue LED 31 via the light input surface 32a; and to output the blue light from the light output surface 32b to the liquid crystal display panel 10.

Next, with reference to Fig. 1 to Fig. 3, a production method of the liquid crystal display panel 10 is described.

First, as shown in Fig. 1, the AM board 11 and the opposite board 12 that sandwich the liquid crystal layer 13 are prepared. And, on the light input surface (rear surface) of the AM board 11, the light polarization filter 14 is formed; on the light output surface (front surface) 12a of the opposite board 12, the light polarization filter 15 and the band-pass filter layer 16 are formed.

Thereafter, as shown in Fig. 2, on the band-pass filter layer 16, the black matrix 21 is formed by using a black resin and the like. Here, the opening portion 21a is formed through each of the red display region R, the green display region G, and the blue display region B of the black matrix 21. Besides, the black matrix 21 is so formed as to have the tapered shape in section.

And, on the side surface of the black matrix 21, the metal reflection film 28 made of, for example, aluminum is formed.

Next, the acrylic resin, which contains the fluorescent material made of, for example, CaS:Eu, is disposed into the opening portion 21a of the red display region R to form the red fluorescent layer 22. And, the acrylic resin, which contains the fluorescent material made of, for example, ZnS:CuAl, is disposed into the opening portion 21a of the green display region G to form the green fluorescent layer 24.

Thereafter, the positive type of resin is disposed into the opening portion 21a of the blue display region B. And, by performing light exposure a plurality of times by using a plurality of masks that have different opening diameters and/or performing half light exposure, the plurality of convex portions 26c (see Fig. 3) are formed on the light output surface 26b of the transparent resin layer 26.

Thereafter, the red filter layer 23, the green filter layer 25 and the blue filter layer 27 are formed on the red fluorescent layer 22, the green fluorescent layer 24 and the blue fluorescent layer 26, respectively.

Here, as another production method of the liquid crystal display panel 10, it is possible to use a conventionally known method. For example, in the case where the acrylic resin and the positive type of resin are disposed into the opening portion 21a, it is possible to use a screen printing method, an ink jet method and the like. Besides, in the case of forming the red filter layer 23, the green filter layer 25 and the blue filter layer 27, it is possible to use a photolithography technology and the like.

In the first embodiment, as described above, the light output surface 26b of the transparent resin layer 26 is provided with the plurality of convex portions 26c; and the transparent resin layer 26 is so structured as to have the refractive index different from that of the blue filter layer 27 which is in contact with the light output surface 26b. According to this, the blue light from the blue LED 31, when passing through the transparent resin layer 26, is so refracted by the plurality of convex portions 26c in accordance with the Snell's law as to spread radially. Because of this, without containing diffusion particles and the like for diffusing the blue light into the transparent resin layer 26 and the blue filter layer 27, it is possible to enlarge the view angle of the blue light output from the transparent resin layer 26 and the blue filter layer 27. As a result of this, it is possible to improve the visual characteristic.

Besides, in the first embodiment, as described above, it is not necessary to contain diffusion particles and the like for diffusing the blue light into the transparent resin layer 26 and the blue filter layer 27, so that when the blue light passes through the transparent resin layer 26 and the blue filter layer 27, it is possible to alleviate the transmittance of the blue light becoming low. According to this, it is possible to alleviate the light (blue light) use efficiency becoming low.

Besides, it is not necessary to contain diffusion particles and the like for diffusing the blue light into the transparent resin layer 26 and the blue filter layer 27, so that in a case where the blue light of the external light enters the transparent resin layer 26 and the blue filter layer 27, the blue light of the external light is not diffused by diffusing particles. According to this, it is possible to alleviate part of the eternal light being output forward, so that it is possible to alleviate the contrast becoming low.

Besides, in the first embodiment, as described above, the blue filter layer 27 is so structured as to have the function to absorb the red light and the green light, whereby it is possible to alleviate the red light and green light of the external light being reflected forward by the band-pass filter layer 16, so that it is possible to more alleviate the contrast becoming low.

Besides, in the first embodiment, as described above, the black matrix 21 having the light blocking characteristic is disposed among the red display region R, the green display region G and the blue display region B, whereby it is possible to alleviate the respective light in the red display region R, the green display region G and the blue display region B entering the neighboring display region. According to this, it is possible to alleviate the light being mixed among the red display region R, the green display region G and the blue display region B, so that it is possible to more alleviate the contrast becoming low.

Besides, in the first embodiment, as described above, the black matrix 21 is so formed as to have the tapered shape in section; and on the side surface of the black matrix 21, the metal reflection film 28 having the function to reflect light is disposed. According to this, by means of the metal reflection film 28, it is possible to reflect forward the light that travels sideward ( toward black matrix 21) in each of the display regions. As a result of this, it is possible to more improve the light use efficiency.

Besides, in the first embodiment, as described above, the band-pass filter layer 16, which reflects the red light and the green light, and transmits the blue light, is disposed between the opposite board 12 and the red fluorescent layer 22, the green fluorescent layer 24 and the blue fluorescent layer 26. According to this, it is possible to reflect forward, by means of the band-pass filter layer 16, the light that is converted into the red light in the red display region R and travels toward the rear surface (toward the backlight device 30); and the light that is converted into the green light in the green display region G and travels toward the rear surface (toward the backlight device 30). As a result of this, it is possible to more improve the light use efficiency.

### (Second Embodiment)

In a second embodiment, with reference to Fig. 5 to Fig. 7, unlike the above first embodiment, a case, where a light output surface 56b of a transparent resin layer 56 is provided with a plurality of concave portions 56c, is described.

In a color filter 47 of a liquid crystal display panel according to the second embodiment of the present invention, as shown in Fig. 5, in the opening portion 21a of the blue display region B, the transparent resin layer 56 and a blue filter layer 57 are formed. And, the transparent resin layer 56 and the blue filter layer 57 constitute a "blue transmission layer" of the present invention. Here, the transparent resin layer 56 is an example of a "light diffusion layer" of the present invention. Besides, the blue filter layer 57 is an example of a "layer that is in contact with a surface which is provided with least either of a plurality of convex portions and a plurality of concave portions" of the present invention.

Here, in the second embodiment, as shown in Fig. 6, the light output surface 56b of the transparent resin layer 56 is provided with the plurality of concave portions 56c. The plurality of concave portions 56c are each so formed as to have: a diameter (width) of, for example, about 1 µm to about 20 µm; and a depth of, for example, about 1 µm to about 10 µm. Here, the light output surface 56b is an example of a "a surface which is provided with at least either of a plurality of convex portions and a plurality of concave portions" of the present invention.

Besides, the transparent resin layer 56 has a refractive index different from that of the blue filter layer 57 which is in contact with the light output surface 56b. Because of this, the blue light from the backlight device 30 (blue LED 31), when passing through the transparent resin layer 56, is so refracted in accordance with the Snell's law as to spread radially, so that it is possible to enlarge the view angle of the blue light.

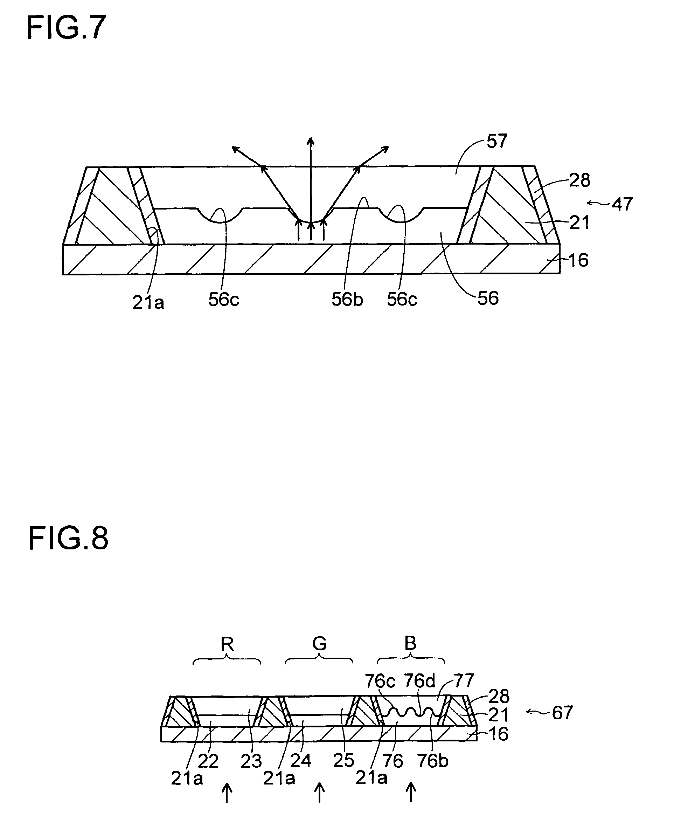

Specifically, in a case where the refractive index of the transparent resin layer 56 is smaller than the refractive index of the blue filter layer 57, the blue light, as shown in Fig. 6, is so refracted as to radially spread; in a case where the refractive index of the transparent resin layer 56 is larger than the refractive index of the blue filter layer 57, the blue light, as shown in Fig. 7, is so refracted as to radially spread. As described above, irrespective of whether the refractive index of the transparent resin layer 56 is smaller or larger than the refractive index of the blue filter layer 57, the blue light, when passing through the light output surface 56b (interface between the transparent resin layer 56 and the blue filter layer 57) of the transparent resin layer 56, is refracted such that the view angle becomes large.

Here, other structures and a production method of the second embodiment are the same as the above first embodiment.

Besides, other effects of the second embodiment are the same as the above first embodiment.

### (Third Embodiment)

In a third embodiment, with reference to Fig. 8, unlike the above first and second embodiments, a case, where a light output surface 76b of a transparent resin layer 76 is provided with both of a plurality of convex portions 76c and a plurality of concave portions 76d, is described.

In a color filter 67 of a liquid crystal display panel according to the third embodiment of the present invention, as shown in Fig. 8, in the opening portion 21a of the blue display region B, the transparent resin layer 76 and a blue filter layer 77 are formed. And, the transparent resin layer 76 and the blue filter layer 77 constitute a "blue transmission layer" of the present invention. Here, the transparent layer 76 is an example of a "light diffusion layer" of the present invention. Besides, the blue filter layer 77 is an example of a "layer that is in contact with a surface which is provided with at least either of a plurality of convex portions and a plurality of concave portions" of the present invention.

Here, in the third embodiment, the light output surface 76b of the transparent resin layer 76 is provided with the plurality of convex portions 76c and the plurality of concave portions 76d. Here, the light output surface 76b is an example of a "a surface which is provided with at least either of a plurality of convex portions and a plurality of concave portions" of the present invention.

Besides, the transparent resin layer 76, like in the first and second embodiments, has a refractive index different from that of the blue filter layer 77 which is in contact with the light output surface 76b. Because of this, the blue light from the backlight device 30 (blue LED 31), when passing through the transparent resin layer 76, is so refracted in accordance with the Snell's law as to spread radially, so that it is possible to enlarge the view angle of the blue light.

Here, other structures and a production method of the third embodiment are the same as the above first embodiment.

Besides, other effects of the third embodiment are the same as the above first and second embodiments.

### (Fourth Embodiment)

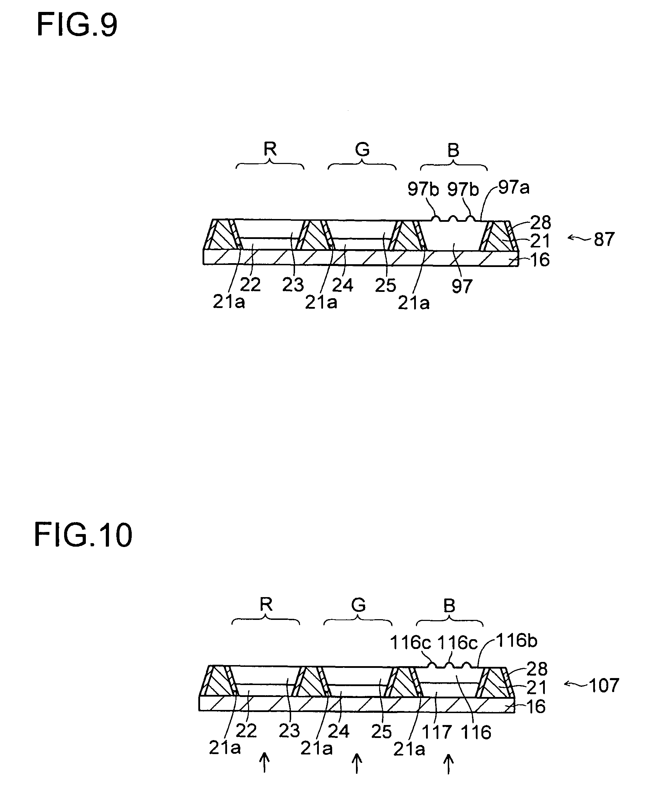

In a fourth embodiment, with reference to Fig. 9, unlike the above first to third embodiments, a case, where only a blue filter layer 97 is formed in the opening portion 21a of the blue display region B, is described.

In a color filter 87 of a liquid crystal display panel according to the fourth embodiment of the present invention, as shown in Fig. 9, in the opening portion 21a of the blue display region B, a transparent resin layer is not formed and only the blue filter layer 97 is formed. And, only the blue filter layer 97 constitutes a "blue transmission layer" of the present invention. Besides, the blue filter layer 97 is an example of a "light diffusion layer" of the present invention.

Here, in the fourth embodiment, a light output surface 97a of the blue filter layer 97 is provided with a plurality of convex portions 97b. The blue filter layer 97 has a refractive index larger than that of an air layer which is in contact with the light output surface 97a, so that the blue light, when passing through the blue filter layer 97, is so refracted in accordance with the Snell's law as to spread radially. According to this, it is possible to enlarge the view angle of the blue light. Here, the light output surface 97a is an example of a "surface which is provided with at least either of a plurality of convex portions and a plurality of concave portions" of the present invention. Besides, the air layer is an example of a "layer that is in contact with a surface which is provided with at least either of a plurality of convex portions and a plurality of concave portions" of the present invention.

Here, in the fourth embodiment, as shown in Fig. 9, the light output surface 97a of the blue filter layer 97 is provided with the plurality of convex portions 97b; however, like in the above second embodiment, the light output surface 97a may be provided with a plurality of concave portions; or like in the above third embodiment, the light output surface 97a may be provided with both of the plurality of convex portions 97b and the plurality of concave portions.

Here, other structures of the fourth embodiment are the same as the above first to third embodiments.

Besides, a production method of the liquid crystal display panel (color filter 87) according to the fourth embodiment is the same as the methods of the first to third embodiments except that a transparent resin layer is not formed; and the light output surface 97a of the blue filter layer 97 is provided with the plurality of convex portions 97b.

In the fourth embodiment, as described above, in the opening portion 21a of the blue display region B, only the blue filter layer 97 is formed; the light output surface 97a of the blue filter layer 97 is provided with the plurality of convex portions 97b. According to this, it is possible to refract the blue light from the blue LED 31 by means of the light output surface 97a (interface between the blue filter layer 97 and the air layer) of the blue filter layer 97. According to this, it is possible to easily enlarge the view angle of the blue light output from the blue filter layer 97, so that it is possible to easily improve the visual characteristic.

Besides, other effects of the fourth embodiment are the same as the above first to third embodiments.

Here, it should be considered that the embodiments disclosed this time are examples in all respects and are not limiting. The scope of the present invention is not indicated by the above description of the embodiments but by the claims, and all modifications within the scope of the claims and the meaning equivalent to the claims are covered.

For example, in the above embodiments, the example, in which the display panel and the display device are applied to the liquid crystal display panel and the liquid crystal display device, respectively, is described; however, the present invention is not limited to this, and may be applied to a display panel and a display device other than the liquid crystal display panel and the liquid crystal display device.

Besides, in the above embodiments, the example, in which the LED is used as the light source, is described; however, the present invention is not limited to this, and a light source such as a semiconductor laser device and the like other than the LED may be used.

Besides, in the above embodiments, the example, in which the liquid crystal (liquid crystal layer) is used as the optical switching device, is described; however, the present invention is not limited to this, and as the optical switching device, a device other than the liquid crystal such as, for example, a MEMS (Micro Electro Mechanical System) and the like may be used.

Besides, in the above first to third embodiments, the example, in which the light output surface (interface between the transparent resin layer and the blue filter layer) of the transparent resin layer is provided with the plurality of convex portions and the plurality of concave portions, is described; however, the present invention is not limited to this, and an example may be employed, in which the light output surface of the transparent resin layer is formed into a planar-surface shape; and the light output surface (front surface) of the blue filter layer is provided with the plurality of convex portions and the plurality of concave portions.

Besides, in the fourth embodiment, the example, in which the blue filter layer is disposed in the opening portion of the blue display region B; and the light output surface of the blue filter layer is provided with the plurality of convex portions and the plurality of concave portions, is described; however, the present invention is not limited to this, and the liquid crystal display panel may be formed as a color filter 107 according to a first modification of the present invention shown in Fig. 10. In other words, as shown in Fig. 10, the inside of the opening portion 21a of the blue display region B may be provided with a blue filter layer 117, and a transparent resin layer 116 that is disposed on a light output surface of the blue filter layer 117; and a light output surface 116b of the transparent resin layer 116 may be provided with a plurality of convex portions 116c and a plurality of concave portions (not shown). Here, the transparent resin layer 116 is an example of a "light diffusion layer" of the present invention. Besides, the light output surface 116b is an example of a "surface which is provided with at least either of a plurality of convex portions and a plurality of concave portions" of the present invention.

Besides, in the above embodiments, the example, in which the light output surface (interface between the transparent resin layer and the blue filter layer) of the transparent resin layer and the light output surface (interface between the blue filter layer and the air layer) of the blue filter layer are provided with the plurality of convex portions and the plurality of concave portions, is described; however, the present invention is not limited to this, and the liquid crystal display panel may be formed as a color filter 127 according to a second modification of the present invention shown in Fig. 11. In other words, as shown in Fig. 11, a surface of a band-pass filter layer 126 is provided with the plurality of convex portions and the plurality of concave portions; and on the band-pass filter layer 126, for example, a transparent resin layer 136 and a blue filter layer 137 are formed. According to this, a light input surface (rear surface) 136a of the transparent resin layer 136 is provided with a plurality of convex portions 136c and a plurality of concave portions are formed. According to this structure, the blue light, when passing through the light input surface 136a (interface between the band-pass filter layer 126 and the transparent resin layer 136) of the transparent resin layer 136, is refracted such that the view angle becomes large. Besides, the transparent resin layer 136 is an example of a "light diffusion layer" of the present invention. Besides, the light input layer 136a is an example of a "surface which is provided with at least either of a plurality of convex portions and a plurality of concave portions" of the present invention. Here, the band-pass filter layer 126 is an example of a "layer that is in contact with a surface which is provided with at least either of a plurality of convex portions and a plurality of concave portions" of the present invention.

Besides, in the above embodiments, the example, in which only the light output surface of the transparent resin layer or only the light output surface of the blue filter layer is provided with the plurality of convex portions and the plurality of concave portions, is described; however, the present invention is not limited to this, and both of the light output surface and the light input surface of the transparent resin layer or both of the light output surface and the light input surface of the blue filter layer may be provided with the plurality of convex portions and the plurality of concave portions.

Besides, in the above embodiments, the example, in which the metal reflection film is formed on the side surface of the black matrix, is described; however, the present invention is not limited to this, and on the side surface of the black matrix, a reflection film other than the metal reflection film may be formed or a reflection film may not be formed.

Besides, in the above embodiments, the example, in which the light blocking member (black matrix) is formed of the black resin, is described; however, the present invention is not limited to this, and the light blocking member may be formed of a resin other than the black resin.

### Reference Signs List

1 liquid crystal display device (display device)
10 liquid crystal display panel (display panel)
12 opposite board (board)
12a light output surface (one surface)
12b light input surface (other surface)
13 liquid crystal layer (optical switching device)
16 band-pass filter layer
21 black matrix (light blocking member)
22 red fluorescent layer
23 red filter layer
24 green fluorescent layer
25 green filter layer
26, 56, 76, 116, 136 transparent resin layer (light diffusion layer)
26a, 136a light input surface
26b, 56b, 76b, 97a, 116b light output surface (surface which is provided with at least either of a plurality of convex portions and a plurality of concave portions)
26c, 76c, 97b, 116c, 136c convex portion
27, 57, 77 blue filter layer (layer that is in touch with a surface which is provided with at least either of a plurality of convex portions and a plurality of concave portions)
28 metal reflection film
31 blue LED (light source)
56c, 76d concave portion
97 blue filter layer (light diffusion layer)
126 band-pass filter layer (layer that is in touch with a surface which is provided with at least either of a plurality of convex portions and a plurality of concave portions)
136a light intput surface (surface which is provided with at least either of a plurality of convex portions and a plurality of concave portions)
R red display region
G green display region
B blue display region

## Claims

1. A display panel comprising:
a board that has a light transmission characteristic;
a red fluorescent layer that is disposed in a red display region on one surface of the board and receives blue light to excite red light;
a red filter layer that is disposed on the red fluorescent layer, blocks green light and blue light, and transmits red light;
a green fluorescent layer that is disposed on a green display region on the one surface of the board and receives blue light to excite green light;
a green filter layer that is disposed on the green fluorescent layer, blocks red light and blue light, and transmits green light;
a blue transmission layer that is disposed in a blue display region on the one surface of the board, blocks red light and green light, transmits blue light and includes one or more layers;
wherein the blue transmission layer includes a light diffusion layer that has: a light input surface through which blue light from a light source is input; and a light output surface through which the blue light from the light source is output;
at least one of the light input surface and the light output surface of the light diffusion layer is provided with at least either of a plurality of convex portions and a plurality of concave portions; and
the light diffusion layer has a refractive index different from that of a layer which is in contact with the surface that is provided with at least either of the plurality of convex portions and the plurality of concave portions.

2. The display panel according to claim 1, wherein
the blue transmission layer includes the light diffusion layer and a blue filter layer that is disposed on the light output surface of the light diffusion layer, blocks red light and green light, and transmits blue light;
the light output surface of the light diffusion layer is provided with at least either of the plurality of convex portions and the plurality of concave portions; and
the light diffusion layer and the blue filter layer have refractive indexes different from each other.

3. The display panel according to claim 1, wherein
the light diffusion layer includes a blue filter layer that blocks red light and green light, and transmits blue light; and
a light output surface of the blue filter layer is provided with at least either of the plurality of convex portions and the plurality of concave portions.

4. The display panel according to any one of claims 1 to 3, wherein
the blue transmission layer has a function to absorb red light and green light.

5. The display panel according to any one of claims 1 to 4, wherein
on one surface of the board, a light blocking member having a light blocking characteristic is disposed among the one surface of the board and the red display region, the green display region, and the blue display region.

6. The display panel according to claim 5, wherein the light blocking member is formed of a black resin.

7. The display panel according to one of claims 5 and 6, wherein
the light blocking member has a tapered shape in section; and
on a surface of the light blocking member, a metal reflection film having a function to reflect light is disposed.

8. The display panel according to any one of claims 1 to 7, wherein
a band-pass filter layer which reflects red light and green light, and transmits blue light is disposed between the board and at least one of the red fluorescent layer and the green fluorescent layer.

9. The display panel according to any one of claims 1 to 8, wherein on the other-surface side of the board, a light switching device which controls transmission and light blocking of the blue light from the light source is disposed.

10. The display panel according to claim 9, wherein the switching device includes liquid crystal.

11. A display device comprising:
the display panel described in any one of claims 1 to 10; and
a light source that outputs blue light for illuminating the display panel.
